# EUROPEAN PATENT APPLICATION

(11) **EP 1 617 104 A2**
(43) Date of publication of application: **18.01.2006**
(21) Application number: 05254441.8
(22) Date of filing: 15.07.2005
(51) Int. Cl.: F16H 55/17, F16H 55/36

(54) **Combined pulley and starter gear for an engine**

(30) Priority: 16.07.2004 GB 0416021
(71) Applicant: Petroliam Nasional Berhad, 50088 Kuala Lumpur (MY)
(72) Inventor: Isnin, Mohamad I. Petroliam Nasional Berhad, Kuala Lumpur 50088 (MY); Mahadzir, Abdullah A., Petroliam Nasional Berhad, Kuala Lumpur 50088 (MY)
(74) Representative: Jones, John Bryn

(57) **Abstract**

A pulley for an engine including a crankshaft and a camshaft, the pulley comprising a first wheel (5002) adapted to drive the camshaft and a second wheel (5004) adapted to be driven by a starter for starting the engine, wherein the first wheel and the second wheel are unitary.

## Description

The present invention relates to a pulley for an engine. Preferred examples relate to a pulley for use in a four-stroke engine, in particular for use in an engine for a vehicle.

Engines are often large and can occupy a large volume of the vehicle in which they are mounted. For high-performance vehicles (such as those used for racing) there is potential benefit in reducing the size and weight of the engine and of the vehicle as a whole.

According to a first aspect of the invention there is provided a pulley for an engine including a crankshaft and a camshaft, the pulley comprising a first wheel adapted to drive the camshaft and a second wheel adapted to be driven by a starter for starting the engine, wherein the first wheel and the second wheel are unitary.

Preferably the first and second wheels are formed together in a single piece. Preferably the pulley comprises a single piece. The pulley is therefore preferably a single piece design but having double functionality.

The axial thickness of a pulley in which the first wheel is unitary with the second wheel can be less than the total axial thickness of an assembly comprising discrete first and second wheels. This can allow the dimensions (and particularly the width) of an engine comprising the unitary pulley to be less than that of an engine comprising discrete first and second wheels, which may be particularly advantageous for use in applications where limitations on the available space in which an engine can be located are an important consideration.

Providing unitary first and second wheels can reduce the cost and the number of components that are required to manufacture the engine. Unitary first and second wheels can also simplify assembly of the engine, by reducing the number of components that are to be aligned, for example with respect to the crankshaft.

Preferably the first and second wheels are adapted to rotate about a common axis of rotation. Preferably, a bore is formed at the common axis of the first and second wheels to allow the pulley to be attached to a rotatable shaft, such as a crankshaft. Alternatively, the pulley may be integrally formed with a rotatable shaft, such as an axle or a crankshaft.

Preferably the pulley is adapted to be mounted on the crankshaft. By integrating the two wheels mounted on the crankshaft, the length of the crankshaft may be reduced. Also the design of the crankshaft can be facilitated by having fewer parts to be mounted onto it.

Preferably the second wheel and/or the first wheel comprise a plurality of teeth. Preferably the teeth of the first wheel (crank shaft timing pulley) are adapted to engage with the teeth of a toothed belt or wheel, or to engage between the links of a chain which is preferably in driving engagement with a cam shaft. Preferably the teeth of the second wheel (starter wheel) are adapted to engage with the teeth of a gear of a starter device. Thus, provision of teeth on the first wheel can allow precise camshaft timing by maintaining a constant relationship between the angle of rotation of the crankshaft and the resulting angle of rotation of the camshaft. The provision of teeth on the second wheel can allow the starter to apply a large torque to the crankshaft via the second wheel, which can facilitate the starting of an engine with high rotational inertia.

Preferably the pulley is adapted to be mounted on a shaft, wherein the pulley comprises a member for facilitating rotational alignment of a tooth of the first wheel with respect to the shaft. Preferably the member is a groove for engagement with a cooperating ridge (such as provided by a wood ruff key) on a shaft (for example the crankshaft).

This can assist with placing the tooth of the pulley in a known rotational alignment with respect to the crankshaft in order to allow the valve timing to be set correctly.

Preferably the pulley further comprises a bore for mounting the pulley on a shaft, wherein the bore has a tapered cross-section. Preferably the cross-section of the shaft corresponds to that of the bore. In an example, an end of the crankshaft has a tapered cross-section with dimensions corresponding to those of the bore. This can assist rigid mechanical coupling of the pulley to the shaft.

Preferably the first wheel is adapted to be mounted closer to the engine than the second wheel. By locating the first wheel close to the engine, the timing belt and cam pulley can also be located close to the engine, thereby reducing the overall size (and particularly the width) of the engine.

Preferably the diameter of the second wheel is greater than the diameter of the first wheel. The large diameter of the second wheel can allow a large torque to be applied to the crankshaft, which can facilitate the starting of an engine with high rotational inertia. In other examples, the diameter of the second wheel is less than or equal to the diameter of the first wheel.

Preferably the second wheel is adapted to disengage from the starter upon starting of the engine. By adapting the second wheel to disengage from the starter, the period of time for which the second wheel is driven by the starter can be limited. By reducing the period of time during which a force is applied by the starter to the second wheel in this manner, tendency for the second wheel to become buckled, worn or otherwise damaged can also be reduced. This can reduce the importance of optimising the mechanical properties of the second wheel, which can allow the manufacturing process for the pulley to be optimised to improve the mechanical properties of the first wheel (the first wheel will typically drive the camshaft for a longer period of time than the period of time during which the second wheel is driven by the starter, and will hence be acted upon by forces for a longer period of time than the second wheel).

When manufacturing the crank wheel and starter wheel for an engine, it is usual to apply a treatment to the wheels to improve the material properties, for example hardness of the parts. It might have been considered that it would not be appropriate to combine the crank wheel and starter wheel into a single unit in view of the different treatments required by the two functional parts. For example, it might have been considered inappropriate to apply a first heat treatment directed to improve the properties of one wheel and to subsequently apply a second heat treatment directed to improve the properties of the other wheel, since the second heat treatment might be detrimental to the properties of the wheel to which the first treatment was directed.

However, it has been found that it is possible to effect a treatment of the pulley which gives acceptable results for both the crank wheel and the starter wheel. Indeed, preferably, the treatment regime is chosen having (primarily) regard to the requirements for the crank wheel since that is the part which is used for a considerably longer service life than the starter wheel, which generally would be used infrequently.

Preferably the pulley has been given a treatment to improve its mechanical properties.

Preferably the pulley comprises hardened material.

Preferably the pulley comprises a surface-treated material. Preferably the pulley comprises a material treated by a nitriding process. Preferably the treatment comprises a Tenifer treatment.

Preferably the pulley comprises heat-treated material. Treatment of material in the pulley, for example by a heat treatment process, a surface treatment process, a nitriding process, a Quench-Polish-Quench (QPQ) process and/or a hardening process, can improve the mechanical properties of the pulley, for example to improve its resistance to buckling, wear or other forms of deterioration or damage.

Preferably the second wheel is substantially symmetrical. Preferably a radial cross-section of the second wheel is substantially symmetrical. The tendency for the second wheel to buckle, or otherwise deteriorate, as a result of a heat treatment process can be reduced by forming the second wheel so as to be substantially symmetrical.

In one embodiment the second wheel may have an induction hardening process applied to a rim of the wheel, preferably applied to teeth of a rim of the wheel.

Alternatively, or in addition, the pulley is formed by sintering. Preferably the pulley is formed by powder sintering. In preferred methods, the pulley is formed substantially without any significant machining of the pulley being required. By using a sintering method to form the pulley, the cost of manufacture may be reduced.

Also the need for treatment of the pulley, for example by heat treatment, can be avoided.

A broad aspect of the invention provides a pulley for an engine, the pulley comprising first and second wheels, the first wheel being adapted to drive a camshaft, wherein the first wheel is integral with the second wheel. According to this aspect there is provided a gear for driving the valve train, the gear being mounted on the crankshaft and being integrated with a further gear of the engine.

A further broad aspect of the invention provides a pulley for an engine, the pulley comprising first and second wheels, the second wheel being adapted to be driven by a starter, wherein the first wheel is integral with the second wheel. According to this aspect there is therefore provided a starter gear integrated with a further gear of the engine; preferably both the starter gear and further gear are mounted on the crankshaft of the engine.

According to a further aspect of the invention, there is provided a method of manufacturing a pulley as herein described.

According to a further aspect of the invention, there is provided a pulley for an engine including a crankshaft and a camshaft, the pulley comprising a first wheel adapted to drive the camshaft and a second wheel adapted to be driven by a starter for starting the engine, wherein the method comprises the step of integrally forming the first wheel with the second wheel. The method may comprise the step of carrying out a hardening treatment on the pulley and/or a heat treatment.

Preferably the treatment step is optimised to improve a mechanical property of the first wheel in preference to improving a mechanical property of the second wheel. Since the first wheel will typically drive the camshaft for a longer period of time than the period of time during which the second wheel is driven by the starter, the life span of the pulley can be increased by improving the mechanical properties of the first wheel in preference to improving the mechanical properties of the second wheel.

Preferably the method comprises the step of applying a Quench-Polish-Quench (QPQ) process to the pulley.

Alternatively, or in addition, the method comprises the step of forming the pulley by powder sintering. Powder sintering can be less expensive than a QPQ process, particularly for large production runs.

Also provided by the invention is a pulley made using a method described herein and an engine comprising a pulley as described herein.

Also provided by the invention is a vehicle comprising an engine as described herein. Preferably the vehicle is a go-kart. It will be appreciated the pulley can be used in conjunction with engines for other types of vehicles, or engines for non- vehicular applications.

Also provided by the invention is an apparatus being substantially as herein described having reference to and/or as illustrated by any of the accompanying drawings and a method being substantially as herein described having reference to the accompanying drawings.

A further aspect of the invention provides any feature or component being substantially as herein described with reference to and as illustrated by any of the accompanying drawings.

Any feature in one aspect of the invention may be applied to other aspects of the invention, in any appropriate combination. In particular, method aspects may be applied to apparatus aspects, and vice versa.

Features of the invention will now be described, purely by way of example, having reference to the accompanying drawings, in which:
Figure 1A is a left side view of an engine;
Figure 1B is a right side view of the engine shown in Figure 1A;
Figure 1C is a front view of the engine shown in Figure 1A;
Figure 1D is an isometric view of the engine shown in Figure 1A;
Figure 1E is a top view of the engine shown in Figure 1A;
Figure 2A is a schematic left side view of a pulley system for use in the engine of Figure 1A;
Figure 2B is a schematic rear view of the pulley system shown in Figure 2A;
Figure 3A is a left side view of a pulley for use in the pulley system of Figure 2A;
Figure 3B is a right side view of the pulley shown in Figure 3A;
Figure 3C is a cross-sectional view along the line A-A indicated in Figure 3B;
Figure 3D is a cross-sectional view along the line B-B indicated in Figure 3B;
Figure 3E is a cross-sectional view along the line C-C indicated in Figure 3D; and
Figure 3F is a detail view of region D indicated in Figure 3B.

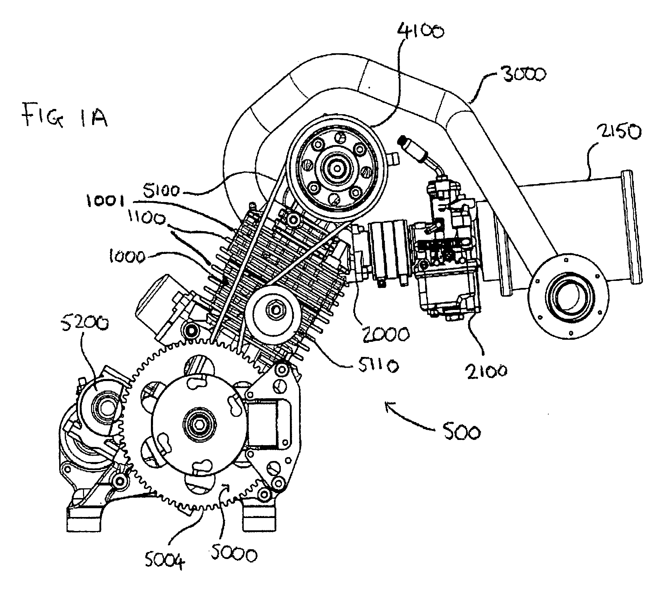

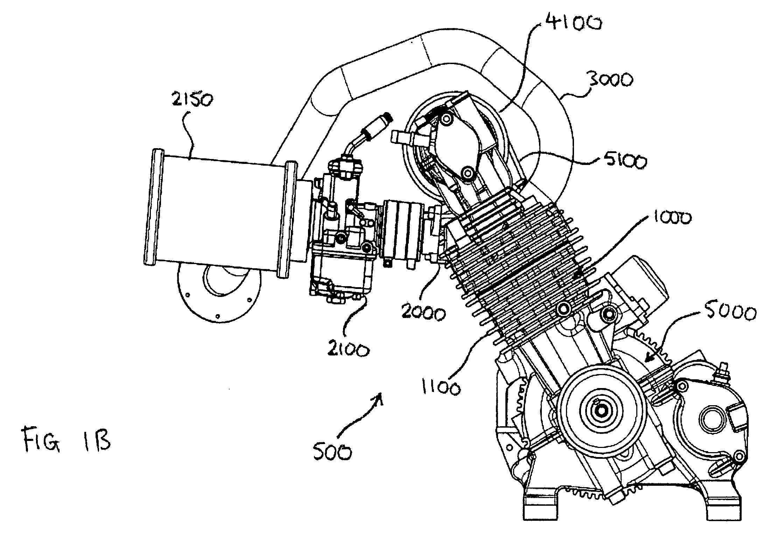

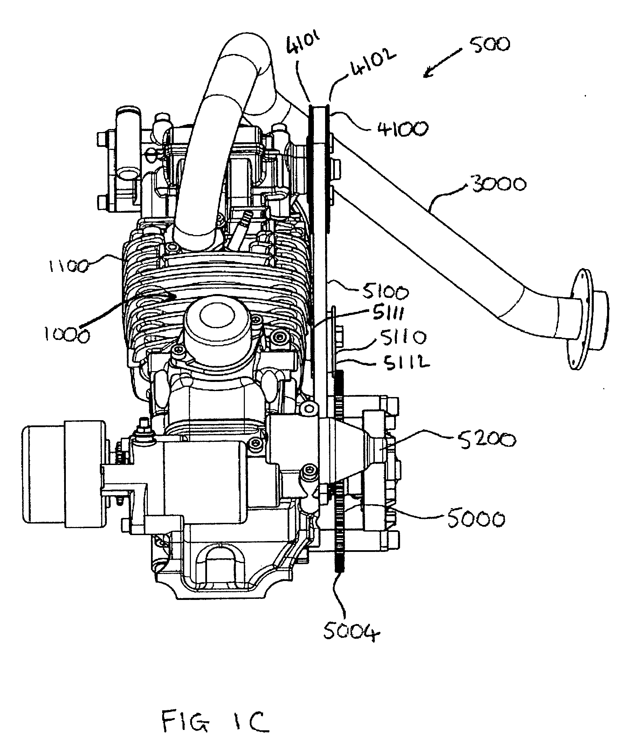

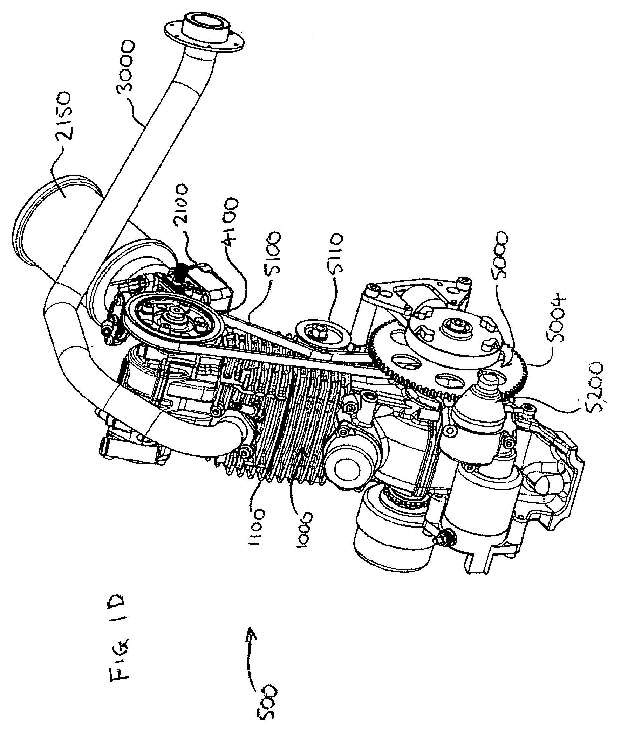

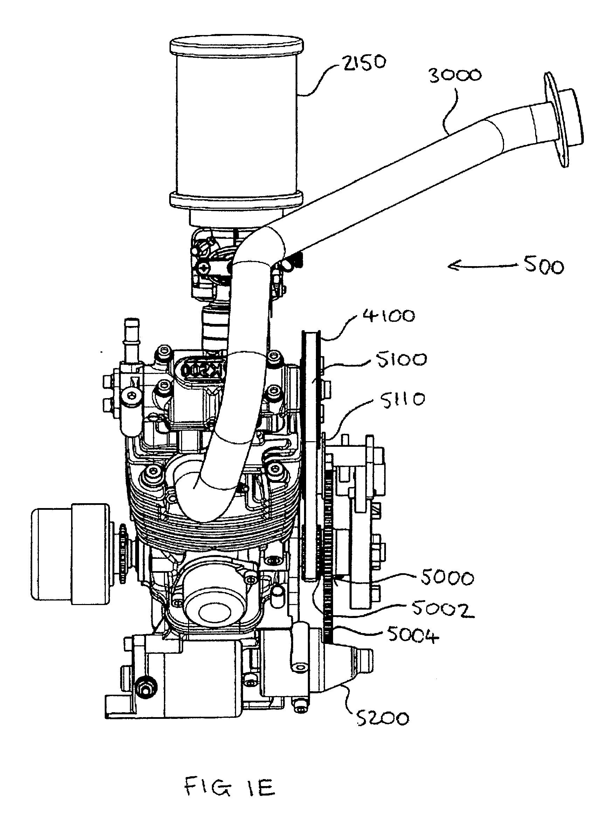

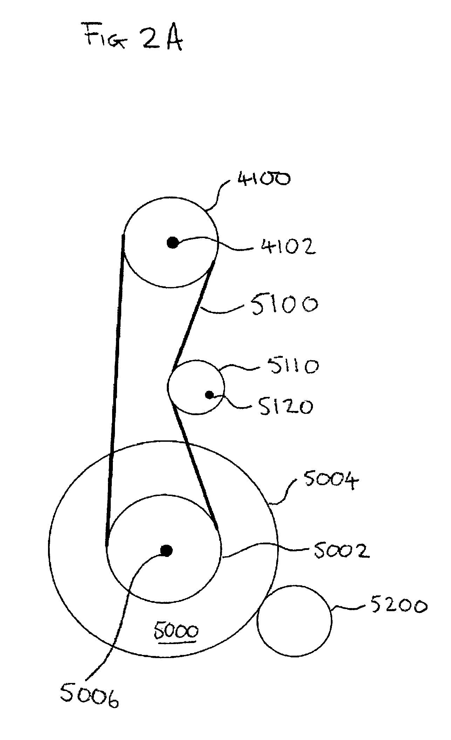

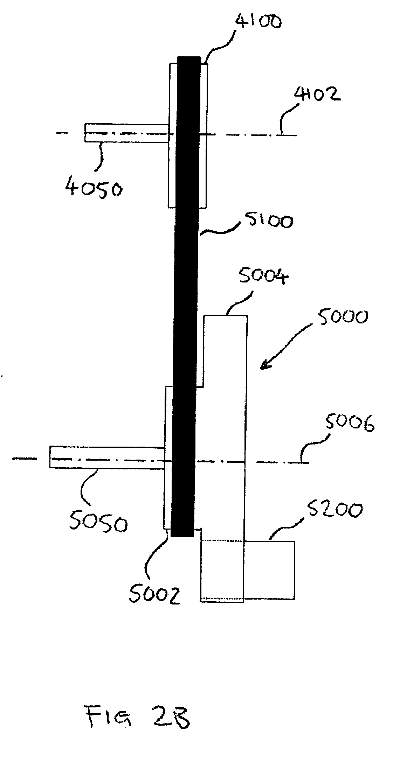

Figures 1A, 1B, 1C, 1D and 1E are left side, right side, front, isometric and top views respectively of an engine 500. Figures 2A and 2B are schematic left and rear views of a pulley system for an engine such as that shown in Figures 1A to 1D.

The engine 500 is an air-cooled, four-stroke, single cylinder combustion engine, which is adapted for use in a go-kart, but may be used for other purposes. It will be readily appreciated that features of the present invention can be applied to an engine having a different design from that shown in Figures 1A to IE. For example the engine may comprise more than one cylinder.

The engine 500 comprises a cylinder body 1000 (also known as a cylinder barrel or a cylinder block) having a casing with air-cooling fins 1100. An air intake 2000 and an exhaust 3000 arranged at opposing sides of a cylinder head 1001 which also includes air cooling fins 1100. A carburettor 2100 and an air filter 2150 are provided upstream of the air intake 2000.

The engine generally functions in a known way by combusting a pressurised airfuel mixture in a combustion chamber of the cylinder head 1001. This combustion causes displacement of a reciprocating piston rotatably connected to a rotary crankshaft 5050 (see Figure 2B). The rotation of the crankshaft 5050 provides movement of the vehicle.

Again, generally in a known manner, valves are associated with the air intake 2000 and the exhaust 3000 for regulating the flow of gases into and out of the combustion chamber. In the present engine, two valves are provided: one at the air intake into the combustion chamber, and one at the exhaust of the combustion chamber. A valve timing system is provided to effect the desired opening and closing of the valves for the combustion cycle.

Various mechanisms are possible for effecting the desired movement of the valves. In a first type of arrangement, the valve system comprises a rotary camshaft 4050 (see Figure 2B) having cam lobes radially projecting from the camshaft 4050. The lobes are formed or mounted on the camshaft 4050 such that the distance of the circumferential surface of the lobe from the axis 4102 of rotation of the camshaft 4050 varies in dependence upon the angular displacement of a point on the surface measured from the axis of the camshaft.

In the two-valve engine, the camshaft comprises two lobes, an intake and an exhaust lobe, which are respectively associated with the intake and exhaust valves. The two valves are biased (by a valve spring) towards the cam lobes. Rotation of the lobes, due to rotation of the camshaft 4050, causes the valves to be displaced by the circumferential surface of the lobe; the distance by which the valve is displaced is dependent upon the angular displacement of the camshaft 4050 and lobe. Thus, the intake and exhaust valves are opened and closed at known intervals defined by, amongst other things, the shape of the lobes with respect to each other and the relative angular displacement between the lobe surfaces.

Other known methods could alternatively be used to operate the valves of the engine.

The operation of the valves is linked with the movement of the piston by using the rotational motion of the crankshaft 5050 to drive the camshaft 4050. As shown in Figure 2A, rotational motion is transferred from the crankshaft 5050 to the camshaft 4050 by a mechanism comprising a cam shaft timing pulley 4100 (also known as a cam shaft timing wheel), a pulley 5000 comprising a crank shaft timing pulley 5002 (also known as a crankshaft timing wheel), and a timing belt 5100 (also known as a cam belt).

The pulley 5000 includes a crank shaft timing pulley 5002 and a starter wheel 5004, having a common axis of rotation 5006.

The crank pulley 5000 is attached towards an end of the crankshaft 5050 with the crank shaft timing pulley 5002 located between the starter wheel 5004 and the cylinder of the engine. The cam shaft timing pulley 4100 is attached towards an end of the camshaft 4050. The timing belt 5100 passes over the circumferential surfaces of the crank shaft timing pulley 5002 and the cam shaft timing pulley 4100. Thus it is seen that rotation of the crankshaft 5050 causes rotation of the crank wheel 5002, which in turn causes movement of the timing belt 5100, rotation of the cam pulley 4100 and thus of the camshaft 4050.

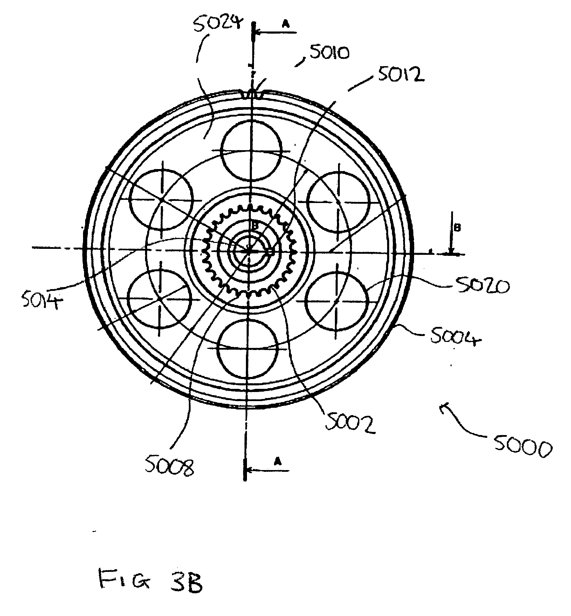

The crank shaft timing pulley 5002 and cam shaft timing pulley 4100 each comprise a toothed outer surface, which teeth cooperate with a plurality of teeth on the interior surface of the timing belt 5100 to ensure correct valve timing. See figure 3B for the tooth profile of the crankshaft timing pulley. Those skilled in the art will be able to determine from figure 3B the corresponding teeth profile of the interior surface for timing belt and of the cam shaft timing pulley.

The crank pulley 5000, cam shaft timing pulley 4100 and timing belt 5100 may be enclosed by a cover.

To initiate the combustion cycle and to effect starting of the engine 500, a starter 5200 is provided. Starter 5200 is of the pre-engaged type, e.g. a solenoid is actuated to slide a gear of the starter along a splined shaft to engage the gear with teeth of the starter wheel (see below) and then the starter motor is actuated to rotate the shaft and hence rotate the starter gear which in turn rotates the starter wheel 5004. Various other starters are known for example inertia type starters. The aim of the starting mechanism is to effect rotation of the crankshaft 5050. This results in motion of the piston, camshaft 4050 and valves, which allows the combustion cycle to be initiated.

In the present example, a Mitsuba SM 14 starter motor is used. The starter comprises an electric motor and a starter gear which rotates as described above when starting the engine.

The starter is arranged such that the starter gear can engage with the starter wheel of the engine. Effecting rotation of the starter wheel can thus effect rotation of the crankshaft 5050 and thus starting of the engine. The starter also includes a mechanism (in this case a solenoid) for engaging and disengaging the starter gear and the starter wheel 5004; the gear is disengaged from the starter wheel 5004 when the starting operation is complete to reduce wear on the starter wheel and the starter itself.

To initiate the combustion cycle of the engine, the starter gear firstly moves into engagement with the pulley 5000 (via actuation of the solenoid), such that the toothed gear engages with the toothed starter wheel 5004. An electrical current is then supplied to the electric motor, causing the rotor of the motor to rotate, which in turn causes rotation of the starter gear, crank pulley 5000, and crankshaft 5050. Once the combustion cycle has been initiated, the starter wheel is disengaged from the starter wheel 5004 and the supply of an electrical current to the electric motor is discontinued, allowing the engine 500 to operate without further involvement of the starter 5200.

Figure 2A further illustrates that the tension of the timing belt 5100 can be set using a tensioning wheel 5110. The tensioning wheel 5110 is mounted between the cam pulley 4100 and the crank pulley 5000, and is capable of rotating about an eccentric pivot 5120. To tension the timing belt 5100, the tensioning wheel 511 0 is rotated about the pivot 5120 until the outer surface of the timing belt 5100 touches the circumferential surface of the tensioning wheel 5110; continued rotation of the tensioning wheel 511 0 in the same direction increases the length of the path that is covered by the belt, thereby applying tension to the belt. In a preferred example, the tensioning wheel 5110 is adapted (for example by polishing its surface) to minimise friction when the timing belt moves over its circumferential surface.

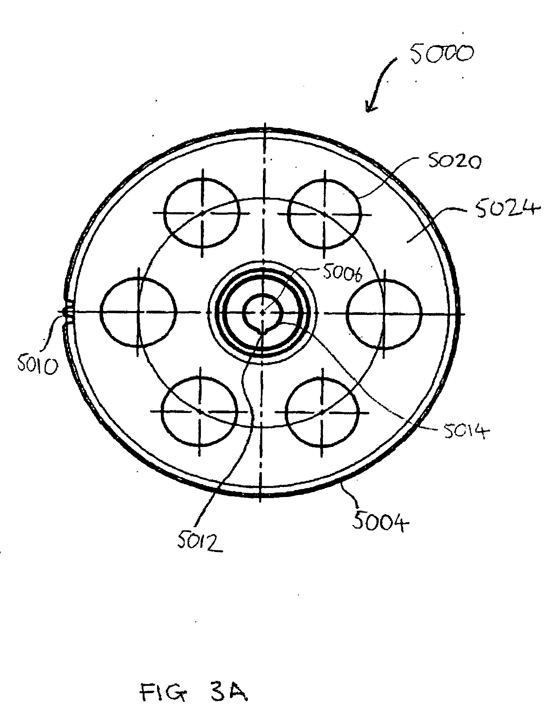

Figures 3A to 3F illustrate the pulley 5000. In this example, the crank pulley 5000 (including the crank shaft timing pulley 5002 and starter wheel 5004) are machined from a single workpiece. The pulley preferably comprises steel, for example CK45 steel, although other appropriate materials could be used. The crank shaft timing pulley 5002 and the starter wheel 5004 are therefore unitary, i.e. they are formed as a single component. In other words, the crank shaft timing pulley 5002 and starter wheel 5004 are integral, and more particularly maybe integrally formed as a single component.

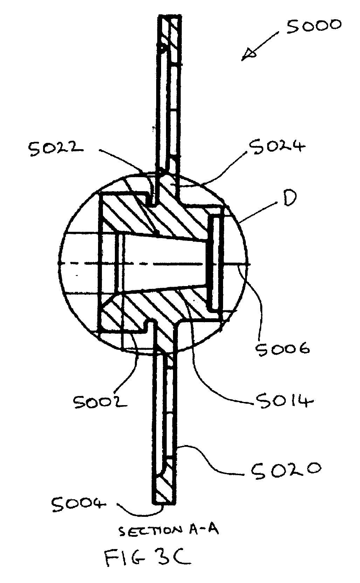

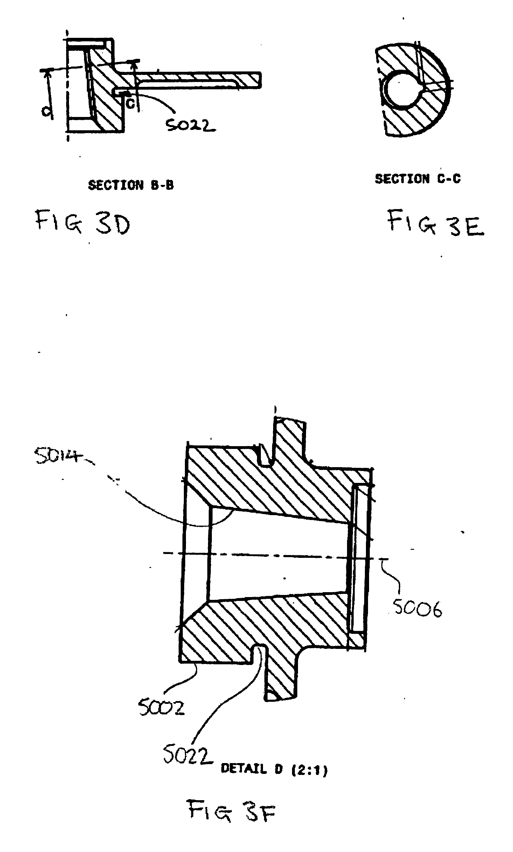

The pulley 5000 comprises a central bore 5014 drilled at the axis 5006 of the crank wheel 5002 and starter wheel 5004 for mounting the pulley 5000 on an end of the crankshaft 5050. It will be seen from Figures 3C and 3F that the bore 5014 tapers inwards in the direction from the crank shaft timing pulley 5002 to the starter wheel 5004. The nose of the crankshaft 5050 onto which the pulley is mounted also tapers towards its end, so that a snug fit of the pulley on the crankshaft nose can be obtained by pushing the pulley onto the crankshaft.

The bore 5014 comprises a groove 5012 (see Figure 3A) engaged by a wood ruff key or the like mounted on the crank shaft to facilitate the correct angular positioning of the pulley on the crankshaft. In this case the groove is aligned such that it shares a common axis with a tooth 5008 of the crank wheel 5002. The angular relationship between groove 5012 and teeth 5008 is predetermined to enable the crank pulley 5000 to be arranged on the crankshaft in a predetermined rotational alignment with respect to the crankshaft in order to allow the valve timing to be set correctly.

A plurality of teeth 5008 are machined onto the outer rim of the crank shaft timing pulley 5002; a plurality of teeth (illustrated by a single tooth 5010) are also machined onto the outer rim of the starter wheel 5004. A notch 5022 between the crank shaft timing pulley 5002 and starter wheel 5004 facilitates the machining of teeth 5008 onto the crank wheel 5002. Providing a clearance between the teeth of the crank shaft timing pulley and the web 5024 of the starter wheel 5004 allows space for the machine tool to run out during the machining of the teeth 5008. The shapes of the teeth of the starter wheel 5004 are designed having reference to the teeth of the starter gear of the starter 5002.

To reduce the mass of the crank pulley 5000, a plurality of circular holes 5020 are drilled through the web 5024 of the starter wheel. It will be appreciated that other shapes could be cut into the web 5024 to reduce the mass of the crank pulley. For example, the web could be cut to form one or more spokes extending in a substantially radial direction from the axis 5006 of the pulley. Holes 5020 are drilled through a portion of web 5024 of reduced thickness (see figure 3C and 3D). In other examples, holes or other features can be formed in the web 5024 by other methods, for example when forming the crank pulley 5000 using a moulding or sintering process.

The crank pulley 5000 is heat-treated to improve its mechanical properties, such as strength, hardness, durability and/or corrosion resistance. In an example of a heat treatment process, after machining the crank pulley 5000 is subject to a hardening process to achieve HRC 24 to 28 using a Tenifer treatment. For example, the machined pulley is immersed in a bath of KCN/KCNO at an elevated temperature for a suitable time. The pulley may be subject to a further Quench-Polish-Quench (QPQ) treatment. An example of a Tenifer and QPQ treatment suitable for the crank pulley 5000 is that performed by Bodycote International plc.

If the pulley is to be subjected to a heat treatment process, the crank pulley 5000 (and particularly the starter wheel 5004) is preferably symmetrical to reduce the risk of distortion, buckling or deterioration to its mechanical properties as a result of the heat treatment.

This treatment regime is selected having regard to the required mechanical properties of the crank shaft timing pulley 5002. It has been found that this treatment regime, while it might not have been thought to have been optimum for the starter wheel, also gives acceptable mechanical properties for the starter wheel. Indeed, since the starter wheel 5004 is only used on starting the engine, it has been found that the mechanical properties of that wheel are less critical than those of the crank wheel 5002, and thus a treatment regime based on the requirements for the crank wheel has been found to be adequate. In particular, it is advantageous to use crank pulley 5000 in conjunction with a pre-engaged starter motor since the shock loading on the teeth 5010 is less when compared with an inertia type starter motor where the inertia of the starter gear causes it to travel along helical splines of the inertia starter motor shaft as the motor is started and thereby engage with the ring gear.

The hardness of the teeth 5010 of the starter wheel 5004 and/or teeth 5008 of the crankshaft timing pulley may be further increased, for example by induction hardening. In the present example, the pulley 5000 is initially hardened to a hardness of HRC 24 to 28. The teeth 5010 of the starter wheel 5004 are then further hardened (in this case by induction hardening) to at least HRC 54. Induction hardening is a heat treatment process that allows teeth 5010 to be locally hardened without effecting the hardness of other parts of the pulley 5000, such as teeth 5008 or have 5014. Thus, it is possible to provide a pulley 5000 having a rim (in particular the teeth) of the starter wheel with a hardness greater than a rim (in particular the teeth) of the crank shaft timing pulley.

Consideration of figures 1A and 1C show that cam shaft timing pulley 4100 includes two flanges 4101 and 4102 spaced apart by a distance slightly greater than the width of the timing belt 5100. These flanges ensure correct axial positioning of the timing belt on the cam shaft timing pulley 4100. Because the timing belt 5100 is under considerable tension, flanges 4101 and 4102 also ensure that the timing belt 5100 is correctly aligned on the crank shaft timing pulley 5002. It will be noted that tensioning wheel 5110 also includes flanges 5111 and 5112 but these are spaced apart by a distance greater than the width of the timing belt and hence do not act to align the timing belt axially on the pulleys. By providing flanges 4101 and 4102 on the cam shaft timing pulley 4100 means that no such alignment flanges need be provided on crank shaft timing pulley 5002 which in turn means that pulley 5000 can be made with a relatively reduced axial thickness, thereby shortening the overall width of the engine.

In an alternative example, the crank pulley 5000 is fabricated in one piece using a powder sintering process. Preferably the pulley is fabricated such that substantially no significant machining is required. Furthermore, the need for further treatment of the pulley may be avoided, and the pulley may be made more cheaply.

Also, the need for the notch 5022 may be avoided, thus allowing the thickness of the pulley to be reduced. In such an arrangement the rim of the crank shaft timing pulley 5002 (in particular the teeth 5008) are continuous with a web (such as web 5024) of the starter wheel.

Features of the invention have been described above having reference to a single cylinder, two valve, single camshaft engine. It will be understood that the invention is applicable to other engines, for example multi-cylinder engines, and engines having more than two valves per cylinder and more than one camshaft.

It will be understood that the present invention has been described above purely by way of example, and modifications of detail can be made within the scope of the invention.

Each feature disclosed in the description, and (where appropriate) the claims and drawings may be provided independently or in any appropriate combination.

Any reference numerals appearing in the claims are by way of illustration only and shall have no limiting effect on the scope of the claims.

## Claims

1. A pulley for an engine including a crankshaft and a camshaft, the pulley comprising a first wheel adapted to drive the camshaft and a second wheel adapted to be driven by a starter for starting the engine, wherein the first wheel and the second wheel are unitary.

2. A pulley according to claim 1, wherein the pulley is adapted to be mounted on the crankshaft.

3. A pulley according to claim 1 or claim 2, wherein the first wheel and/or the second wheel comprises a plurality of teeth.

4. A pulley according to any preceding claim, wherein the pulley comprises hardened material.

5. A pulley according to any preceding claim, wherein the pulley comprises heat-treated material.

6. A pulley according to any preceding claim in which a hardness of a rim of the second wheel is greater than the hardness of a rim of the first wheel.

7. A pulley according to any of the preceding claims, wherein the pulley is formed by sintering.

8. A pulley according to claim 7 in which a rim of the first wheel is continuous with a web of the second wheel.

9. A method of manufacturing a pulley for an engine including a crankshaft and a camshaft, the pulley comprising a first wheel adapted to drive the cam shaft and a second wheel adapted to be driven by a starter for starting the engine, wherein the method comprises the step of integrally forming the first wheel with the second wheel as a single component.

10. A method of manufacturing a pulley according to claim 9 in which following the step of integrally forming the first wheel with the second wheel as a single component the pulley has a first hardness, the method further comprising the steps of:-
a) hardening the pulley to a second hardness greater than the first hardness,
b) then hardening a rim of the second wheel to a third hardness greater than the second hardness

11. A method of manufacturing a pulley according to claim 10 in which step b) is carried out by an induction hardening process.

12. A method according to any one of claims 9 to 11, wherein the treatment step is directed to improve mechanical property of the first wheel in preference to improving a mechanical property of the second wheel.

13. A method according to any one of claims 9 to 12, wherein the method comprises the step of applying a Quench-Polish-Quench (QPC) process to the pulley.

14. A method according to any one of claims 9 to 13, wherein the method comprises the step of forming the pulley by powder sintering.

15. An engine comprising a pulley according to any one of claims 1 to 8 in which the engine includes a cam shaft timing pulley driven by a timing belt in driven engagement with the first wheel, the engine further including means for aligning the timing belt relative to the first wheel, said means being provided other than on the first wheel.

16. An engine according to claim 15 in which said means are provided on the cam shaft timing pulley.

17. An engine according to claim 16 in which said means comprise a first flange situated on a first side of the timing belt and a second flange situated on a second side of the timing belt.
